# EUROPEAN PATENT SPECIFICATION

(11) **EP 0 929 213 B1**
(45) Date of publication and mention of the grant of the patent: **09.01.2002**
(21) Application number: 98920739.4
(22) Date of filing: 01.05.1998
(51) Int. Cl.: A01J 7/04, A01K 14/00

(54) **AN IMPLEMENT FOR SHAVING ANIMALS**
RASIERAPPARAT FÜR TIERE
INSTALLATION POUR LE RASAGE D'ANIMAUX

(30) Priority: 07.05.1997 NL 1006004
(43) Date of publication of application: 21.07.1999
(73) Proprietor: MAASLAND N.V., 3155 PD Maasland (NL)
(72) Inventor: VAN DER LELY, Cornelis, CH-6300 Zug (CH); VAN DER LELY, Olaf, CH-6300 Zug (CH)
(74) Representative: Corten, Maurice Jean F.M.
(86) International application number: NL9800243
(87) International publication number: WO9849890

(56) References cited:
- AU-A- 3 147 377

## Description

The invention relates to an implement for shaving animals, such as cows, according to the preamble of claim 1.

Such an implement is known, for example from AU-A-31473. This known implement comprises a main frame slidably mounted to an overhead rail via a support hydraulic ram which accommodates for a variation in height of the main frame. Cutter blades are arranged in pairs where each pair is rotatably supported on a separate support frame. Each separate support frame is mounted to the main frame by means of a respective hydraulic ram. The main frame supports the cutters to define a substantially horseshoe shaped cutting profile.

In the known implement the animals are partly shaved manually by means of a shaver. With cows, usually the udder and the hind legs are shaved in order to prevent dirt from sticking thereto.

Shaving the animals manually by means of a shaver is a time-consuming and unpleasant job.

The invention aims at obtaining an implement as described above, in which the aforementioned drawbacks do not occur or are at least minimized.

According to the invention, this is achieved by the characterizing features of claim 1. In this manner an operating person is no longer required for shaving the udder. In a preferred embodiment of the invention, the shaving machine is disposed near a side wall of the accommodation. If cows have to be shaved, the shaving machine is arranged near the place where the udder is located when the animal has entered the accommodation. According to a further inventive feature, the shaving machine is provided with displacing means with the aid of which the shaver can be moved from outside the accommodation towards the animal to be shaved or vice versa.

In accordance with a further aspect of the invention, the displacing means comprise displacing elements, such as stepper motors or servo-pneumatic or hydraulic cylinders by means of which the shaver can be moved in the upward direction of the accommodation as well as in the longitudinal and transverse direction thereof. The displacing elements make it possible to shave almost every place of an animal's skin.

According to a further inventive feature, the shaver comprises a housing provided with a shaving head having a stationary upper knife that co-operates with a motor-driven lower knife disposed thereunder. In a preferred embodiment of the invention, the upper knife is designed as a semi bowl-shaped cutting member, while the lower knife comprises a number of knives that are fitted at some distance from each other to a shaft of the motor of the shaver. According to an inventive feature, the knives are designed as circle segments having an angle of approximately 90°.

For the purpose of cleaning the shaver, according to an inventive feature, the upper knife is detachably disposed on the housing of the shaver. According to again another inventive feature, the implement comprises a computer for automatically controlling the shaving device. In accordance with an inventive feature, the computer contains a program in which the co-ordinates of the surface to be shaved of the animal are stored. For the purpose of determining which animal is present in the accommodation, in accordance with an inventive feature, the implement comprises an animal identification system. With the aid of the animal identification system and the computer, the correct coordinates of the surface to be shaved can be determined for the relevant animal. According to again another inventive feature, the implement comprises time adjusting means which include a first program by means of which, in an animal-dependent manner if so desired, the shaving time can be adjusted. In a preferred embodiment of the invention, the shaving time of the udder preferably amounts to 30 seconds. According to again another aspect of the invention, the time adjusting means include a second program by means of which, in an animal-dependent manner if so desired, the interval between two shaving runs can be adjusted.

In accordance with another embodiment of the invention, the time adjusting means include a second program by means of which, in an animal-dependent or group-dependent manner, the number of milking runs after the last shaving operation is counted, and in which it is possible to pre-set, in an animal-dependent or group-dependent manner, the number of milking runs after which the animal or the group of animals has to be shaved again. The second embodiment is particularly suitable if shaving takes place before or after milking. In a further embodiment of the invention, the number of pre-set milking runs preferably amounts to ten.

Besides the fact that the coordinates of the surface to be shaved can be inputted into the computer, according to another inventive feature, it is additionally possible to provide the implement with detection means with the aid of which the coordinates of the part to be shaved of the animal can be determined. According to an inventive feature, the detection means comprise a sensor, such as a laser and/or a camera and/or an ultrasonic sensor and/or any other suitable sensor.

In a preferred embodiment according to the invention, the implement is also provided with an automatic milking device. By shaving the udder periodically prior to milking, it is possible to work very hygienically, which has a positive effect on the milk quality. According to again another inventive feature, the automatic milking device is provided with a milking robot for automatically connecting teat cups to the teats of an animal to be milked. Because of this, both milking and shaving can take place fully automatically without an operating person being required.

In accordance with an inventive feature, the aforementioned detection means can also be used for determining the co-ordinates of the teats for the milking robot.

The invention furthermore relates to a method of automatically shaving animals, in which, after an animal has entered an accommodation, the animal or at least a possibly predetermined part of the animal is shaved by means of a shaving machine, characterized in that during shaving the shaver is moved across the surface of the udder to be shaved in a reciprocating manner. According to a further aspect of the invention, after the shaving operation has ended, the shaver is moved to outside the accommodation.

For a better understanding of the invention, reference will now be made to an embodiment shown in the accompanying drawings, in which:
Figure 1 is a rear view of an udder with a shaving device for shaving the udder arranged therebelow;
Figure 2 is a plan view according to the arrow II in Figure 1 of the shaving head of the shaving device.

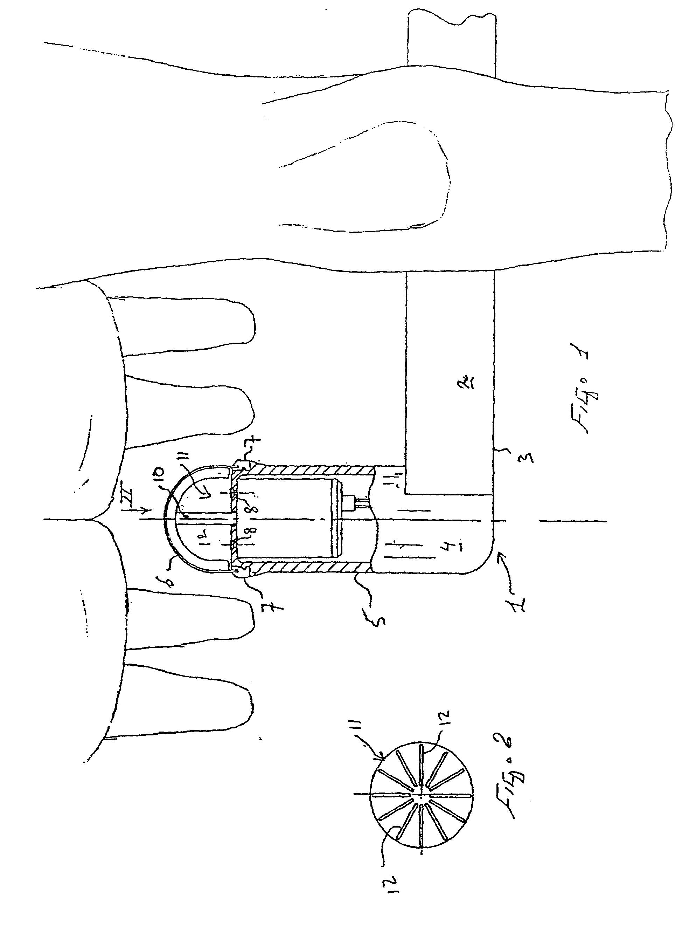

Figure 1 represents part of a shaving device 1 for automatically shaving animals (partially showing the interior thereof). The shaving device 1 comprises a non entirely shown shaving machine 2. The shaving machine 2 has a robot arm 3 whose end is provided with a shaver 4. The shaving machine 2 is hingeably disposed near a side wall of a non-shown accommodation for the animal.

The shaver 4 comprises a cylindrical housing 5 which is provided at its upper side with a shaving head. The shaving head comprises a stationary upper knife 6 which is designed in the present embodiment as a semi bowl-shaped cutting member. The shaving head is fastened to the housing 5 by means of detachable connections 7. This makes it possible to clean or to repair the shaver 4 on the inside. By means of screws 8, an electromotor 9 provided with a shaft 10 is disposed in the cylindrical housing 5. Under the shaving head there is disposed a lower knife 11 which cooperates with the upper knife 6. As shown in Figure 2, the lower knife 11 comprises a number of knives 12, which are fitted at some distance from each other to the shaft 10 of the electromotor 9. The knives 12 are designed as segments of a circle having an angle of approximately 90°.

The function of the above described implement is as follows.

After an animal has entered an accommodation, the animal is identified by the animal identification system. With the aid of non-shown time adjusting means the interval is determined between the moment when the animal enters the accommodation and the last shaving run. If the interval has exceeded a predetermined threshold, a non-shown computer decides that the animal is to be shaved. With the aid of non-shown detection means the coordinates of the part to be shaved of the animal are determined. On the basis of these coordinates, non-shown displacing means comprising displacing elements are activated in order that the robot arm 3 including the shaver 4 is moved to the place that has to be shaved. Subsequently the electromotor 9 is energized, so that the lower knife 11 starts rotating. Then, the shaving head is moved in a reciprocating manner across the surface to be shaved by means of the robot arm 3. In a preferred embodiment of the invention, there is recorded in the computer that the shaving time amounts to approximately 30 seconds. After the surface has been shaved, the shaver 4 is pivoted to outside the accommodation and the electromotor 9 is switched off. In a preferred embodiment of the invention, the implement comprises a non-shown automatic milking device including a milking robot. After the udder and/or the legs of the animal have been shaved, with the aid of the detection means the position of the teats of the animal to be milked is determined. By means of the milking robot, subsequently non-shown teat cups are connected to the teats of the animal to be milked, after which the animal is milked automatically. Since the udder of the animal and/or the legs of the animal have been shaved beforehand, it is possible to milk very hygienically, because no dirt can stick to the hairs of the animal during milking. If the above-mentioned shaving device 1 cooperates with a milking robot, the time adjusting means include a program in which, in an animal-dependent manner, the number of milking runs after the last shaving operation is counted. There has been inputted into the program that the animal is to be shaved again after ten milking runs.

## Claims

1. An implement for shaving animals, such as cows, which implement comprises one or more accommodations where the animals can stay and is provided with a shaving device (1), the shaving device comprising a shaving machine (2) for automatically shaving the animals, **characterized in that** the shaving machine (2) has at least one robot arm (3) of which one end is provided with a shaver (4), and **in that** the implement is designed in such a manner that by means of the shaving device (1) the udder of a cow can be shaved.

2. An implement as claimed in claim 1, **characterized in that** the shaving machine (2) is hingeably disposed near a wall of the accommodation of an animal.

3. An implement as claimed in claim 2, **characterized in that** the shaving machine (2) is provided with displacing means with the aid of which the shaver (4) can be moved from an operative position into an inoperative position.

4. An implement as claimed in any one of the preceding claims, **characterized in that** the displacing means of the implement comprise displacing elements, such as stepper motors or servo-pneumatic or hydraulic cylinders by means of which the shaver (4) can be moved in the upward direction of the accommodation as well as in the longitudinal and transverse direction thereof.

5. An implement as claimed in any one of the preceding claims, **characterized in that** the shaver (4) comprises a housing (5) provided with a shaving head having a stationary upper knife (6) that co-operates with a motor-driven lower knife (11) disposed thereunder.

6. An implement as claimed in any one of the preceding claims, **characterized in that** the upper knife (6) is designed as a semi bowl-shaped cutting member.

7. An implement as claimed in any one of the preceding claims, **characterized in that** the lower knife (11) comprises a number of knives (12) that are fitted at some distance from each other.

8. An implement as claimed in any one of the preceding claims, **characterized in that** the knives (12) are designed as circle segments having an angle of approximately 90°.

9. An implement as claimed in any one of the preceding claims, **characterized in that** the upper knife (6) is detachably disposed on the housing (5) of the shaver (4).

10. An implement as claimed in any one of the preceding claims, **characterized in that** the implement comprises a computer for automatically controlling the shaving device (1).

11. An implement as claimed in any one of the preceding claims, **characterized in that** the computer contains a program in which the co-ordinates of the surface to be shaved of the animal are stored.

12. An implement as claimed in any one of the preceding claims, **characterized in that** the implement comprises an animal identification system.

13. An implement as claimed in any one of the preceding claims, **characterized in that** the implement comprises time adjusting means which include a first program by means of which, in an animal-dependent manner if so desired, the shaving time can be adjusted.

14. An implement as claimed in any one of the preceding claims, **characterized in that** the shaving time preferably amounts to 30 seconds.

15. An implement as claimed in any one of the preceding claims, **characterized in that** the time adjusting means include a second program by means of which, in an animal-dependent manner if so desired, the interval between two shaving runs can be adjusted.

16. An implement as claimed in any one of the preceding claims, **characterized in that** the number of pre-set milking runs preferably amounts to ten.

17. An implement as claimed in any one of the preceding claims, **characterized in that** the implement is provided with detection means with the aid of which the co-ordinates of the part to be shaved of the animal can be determined.

18. An implement as claimed in any one of the preceding claims, **characterized in that** the detection means comprise a sensor, such as a laser and/or a camera and/or an ultrasonic sensor.

19. An implement as claimed in any one of the preceding claims, **characterized in that** the implement is provided with an automatic milking device.

20. An implement as claimed in any one of the preceding claims, **characterized in that** the automatic milking device is provided with a milking robot for automatically connecting teat cups to the teats of an animal to be milked.

21. An implement as claimed in any one of the preceding claims, **characterized in that** the detections means can also be used for the milking robot.

22. An implement as claimed in any one of the preceding claims, **characterized in that** the shaving head comprises a stationary upper knife (6) and a rotating lower knife (11).

23. An implement as claimed in any one of the preceding claims, **characterized in that** the implement is designed in such a manner that by means of the shaving device (1) the hind legs of a cow can be shaved.

24. An implement as claimed in any one of the preceding claims, **characterized in that** the implement has a carrier arm for displacing the shaving head into and out of the working area and for moving the shaving head in a reciprocating manner.

25. An implement as claimed in any one of the preceding claims, **characterized in that** the shaving head can be moved automatically into an inoperative position.

26. An implement as claimed in any one of the preceding claims, **characterized in that** the teat cups are movable into the inoperative position.

27. An implement as claimed in any one of the preceding claims, **characterized in that** after e.g. ten milking runs the udder is shaved one time.

28. An implement as claimed in any one of the preceding claims, **characterized in that** after shaving the shaving device is moved into the inoperative position near a wall.

29. An implement as claimed in any one of the preceding claims, **characterized in that** the shaving device is adjustable in such a manner that shaving takes 30 seconds.

30. An implement as claimed in any one of the preceding claims, **characterized in that** the shaving device utilizes the same laser detector as is used for milking.

31. A method of automatically shaving animals, in which, after an animal has entered an accommodation, the animal or at least a possibly predetermined part of the animal is shaved automatically by means of a shaving machine, **characterized in that** during shaving the shaver (4) is moved across the surface of the udder to be shaved in a reciprocating manner.

32. A method as claimed in claim 31, **characterized in that**, after the shaving operation has ended, the shaver (4) is moved to outside the accommodation.

## Patentansprüche

1. Anlage zum Rasieren von Tieren, wie z. B. Kühen, wobei die Anlage eine oder mehrere Unterkünfte umfaßt, in denen sich die Tiere aufhalten können, und mit einer Rasiervorrichtung (1) versehen ist, wobei die Rasiervorrichtung eine Rasiermaschine (2) zum automatischen Rasieren der Tiere umfaßt,
**dadurch gekennzeichnet, daß** die Rasiermaschine (2) mindestens einen Roboterarm (3) aufweist, dessen eines Ende mit einem Rasierapparat (4) versehen ist, und daß die Anlage derart ausgebildet ist, daß mittels der Rasiervorrichtung (1) das Euter einer Kuh rasiert werden kann.

2. Anlage nach Anspruch 1,
**dadurch gekennzeichnet, daß** die Rasiermaschine (2) nahe einer Wand der Unterkunft eines Tieres gelenkig angeordnet ist.

3. Anlage nach Anspruch 2,
**dadurch gekennzeichnet, daß** die Rasiermaschine (2) mit einer Verschiebevorrichtung versehen ist, mit deren Hilfe der Rasierapparat (4) von einer Arbeitslage in eine Ruhelage bewegt werden kann.

4. Anlage nach einem der vorhergehenden Ansprüche,
**dadurch gekennzeichnet, daß** die Verschiebevorrichtung der Anlage Verschiebeelemente, wie z. B. Schrittmotoren oder servopneumatische oder hydraulische Zylinder, umfaßt, mittels derer der Rasierapparat (4) in Aufwärtsrichtung sowie in Längs- und in Querrichtung der Unterkunft bewegt werden kann.

5. Anlage nach einem der vorhergehenden Ansprüche,
**dadurch gekennzeichnet, daß** der Rasierapparat (4) ein Gehäuse (5) umfaßt, das mit einem Scherkopf versehen ist, der ein feststehendes oberes Messer (6) aufweist, das mit einem darunter angeordneten, motorisch angetriebenen unteren Messer (11) zusammenwirkt.

6. Anlage nach einem der vorhergehenden Ansprüche,
**dadurch gekennzeichnet, daß** das obere Messer (6) als halbschalenförmiges Schneidglied ausgeführt ist.

7. Anlage nach einem der vorhergehenden Ansprüche,
**dadurch gekennzeichnet, daß** das untere Messer (11) eine Anzahl von Messern (12) umfaßt, die mit einigem Abstand voneinander angeordnet sind.

8. Anlage nach einem der vorhergehenden Ansprüche,
**dadurch gekennzeichnet, daß** die Messer (12) als Kreissegmente mit einem Winkel von etwa 90° ausgeführt sind.

9. Anlage nach einem der vorhergehenden Ansprüche,
**dadurch gekennzeichnet, daß** das obere Messer (6) an dem Gehäuse (5) des Rasierapparates (4) lösbar angebracht ist.

10. Anlage nach einem der vorhergehenden Ansprüche,
**dadurch gekennzeichnet, daß** die Anlage einen Computer zum automatischen Steuern der Rasiervorrichtung (1) umfaßt.

11. Anlage nach einem der vorhergehenden Ansprüche,
**dadurch gekennzeichnet, daß** der Computer ein Programm enthält, in dem die Koordinaten der zu rasierenden Oberfläche des Tieres gespeichert sind.

12. Anlage nach einem der vorhergehenden Ansprüche,
**dadurch gekennzeichnet, daß** die Anlage ein Tieridentifikationssystem umfaßt.

13. Anlage nach einem der vorhergehenden Ansprüche,
**dadurch gekennzeichnet, daß** die Anlage eine Zeiteinstellvorrichtung umfaßt, die ein erstes Programm enthält, mittels dessen in Abhängigkeit von dem Tier, falls dies gewünscht wird, die Rasierzeit eingestellt werden kann.

14. Anlage nach einem der vorhergehenden Ansprüche,
**dadurch gekennzeichnet, daß** die Rasierzeit vorzugsweise 30 Sekunden beträgt.

15. Anlage nach einem der vorhergehenden Ansprüche,
**dadurch gekennzeichnet, daß** die Zeiteinstellvorrichtung ein zweites Programm enthält, mittels dessen in Abhängigkeit von dem Tier, falls dies gewünscht wird, der Zeitabstand zwischen zwei Rasiervorgängen eingestellt werden kann.

16. Anlage nach einem der vorhergehenden Ansprüche,
**dadurch gekennzeichnet, daß** sich die Anzahl von vorgegebenen Melkvorgängen vorzugsweise auf zehn beläuft.

17. Anlage nach einem der vorhergehenden Ansprüche,
**dadurch gekennzeichnet, daß** die Anlage mit einer Ermittlungsvorrichtung versehen ist, mit deren Hilfe die Koordinaten des zu rasierenden Teiles des Tieres ermittelt werden können.

18. Anlage nach einem der vorhergehenden Ansprüche,
**dadurch gekennzeichnet, daß** die Ermittlungsvorrichtung einen Sensor, wie z. B. einen Laser und/oder eine Kamera und/oder einen Ultraschallsensor, umfaßt.

19. Anlage nach einem der vorhergehenden Ansprüche,
**dadurch gekennzeichnet, daß** die Anlage mit einer automatischen Melkvorrichtung versehen ist.

20. Anlage nach einem der vorhergehenden Ansprüche,
**dadurch gekennzeichnet, daß** die automatische Melkvorrichtung mit einem Melkroboter zum automatischen Anschließen von Zitzenbechern an die Zitzen eines zu melkenden Tieres versehen ist.

21. Anlage nach einem der vorhergehenden Ansprüche,
**dadurch gekennzeichnet, daß** die Ermittlungsvorrichtung auch für den Melkroboter verwendet werden kann.

22. Anlage nach einem der vorhergehenden Ansprüche,
**dadurch gekennzeichnet, daß** der Scherkopf ein feststehendes oberes Messer (6) und ein rotierendes unteres Messer (11) umfaßt.

23. Anlage nach einem der vorhergehenden Ansprüche,
**dadurch gekennzeichnet, daß** die Anlage derart ausgebildet ist, daß mittels der Rasiervorrichtung (1) die Hinterbeine einer Kuh rasiert werden können.

24. Anlage nach einem der vorhergehenden Ansprüche,
**dadurch gekennzeichnet, daß** die Anlage einen Tragarm zum Verschieben des Scherkopfes in den Arbeitsbereich hinein und aus ihm heraus und zum Hin- und Herbewegen des Scherkopfes aufweist.

25. Anlage nach einem der vorhergehenden Ansprüche,
**dadurch gekennzeichnet, daß** der Scherkopf automatisch in eine Ruhelage bewegt werden kann.

26. Anlage nach einem der vorhergehenden Ansprüche,
**dadurch gekennzeichnet, daß** die Zitzenbecher in die Ruhelage bewegt werden können.

27. Anlage nach einem der vorhergehenden Ansprüche,
**dadurch gekennzeichnet, daß** nach beispielsweise zehn Melkvorgängen das Euter einmal rasiert wird.

28. Anlage nach einem der vorhergehenden Ansprüche,
**dadurch gekennzeichnet, daß** die Rasiervorrichtung nach dem Rasieren in die Ruhelage nahe einer Wand bewegt wird.

29. Anlage nach einem der vorhergehenden Ansprüche,
**dadurch gekennzeichnet, daß** die Rasiervorrichtung derart einstellbar ist, daß das Rasieren 30 Sekunden dauert.

30. Anlage nach einem der vorhergehenden Ansprüche,
**dadurch gekennzeichnet, daß** die Rasiervorrichtung denselben Laserdetektor verwendet, der zum Melken benutzt wird.

31. Verfahren zum automatischen Rasieren von Tieren, bei dem nach Betreten einer Unterkunft durch ein Tier das Tier oder zumindest ein eventuell vorgegebener Teil des Tieres automatisch mittels einer Rasiermaschine rasiert wird,
**dadurch gekennzeichnet, daß** der Rasierapparat (4) während des Rasierens über die zu rasierende Oberfläche des Euters hin- und herbewegt wird.

32. Verfahren nach Anspruch 31,
**dadurch gekennzeichnet, daß** der Rasierapparat (4) nach Beendigung des Rasiervorganges aus der Unterkunft herausbewegt wird.

## Revendications

1. Installation pour le rasage d'animaux, tels que des vaches, comprenant une ou plusieurs stalles dans lesquelles les animaux peuvent pénétrer et munie d'un dispositif de rasage (1) composé d'une machine de rasage (2) destinée au rasage automatique des animaux, **caractérisée en ce que** la machine de rasage (2) est équipée d'au moins un bras robotisé (3) dont une extrémité est munie d'un rasoir (4) et **en ce que** l'installation est conçue de telle sorte que le pis d'une vache puisse être rasé au moyen du dispositif de rasage (1).

2. Installation selon la revendication 1, **caractérisée en ce que** la machine à raser (2) est montée de façon articulée près d'une paroi latérale de la stalle dans laquelle a pénétré un animal.

3. Installation selon la revendication 2, **caractérisée en ce que** la machine à raser (2) est équipée d'un système de déplacement avec l'aide duquel il est possible de mettre le rasoir (4) en position de fonctionnement ou de non-fonctionnement.

4. Installation selon l'une quelconque des revendications ci-dessus, **caractérisée en ce que** le système de déplacement comprend des éléments de déplacement, tels que des moteurs pas à pas ou des vérins servo pneumatiques ou hydrauliques, au moyen desquels il est possible de déplacer le rasoir (4) dans le sens vertical de la stalle comme dans le sens longitudinal et transversal de la stalle.

5. Installation selon l'une quelconque des revendications ci-dessus, **caractérisée en ce que** le rasoir (4) se compose d'un carter (5) muni d'une tête de rasage équipée d'un élément de coupe supérieur fixe (6) qui travaille en association avec un élément de coupe inférieur (11) entraîné par un moteur et situé en dessous.

6. Installation selon l'une quelconque des revendications ci-dessus, **caractérisée en ce que** l'élément de coupe supérieur fixe (6) est conçu comme un organe de coupe presque en forme de bol.

7. Installation selon l'une quelconque des revendications ci-dessus, **caractérisée en ce que** l'élément de coupe inférieur (11) comprend un certain nombre de lames (12) montées à une certaine distance les unes par rapport aux autres.

8. Installation selon l'une quelconque des revendications ci-dessus, **caractérisée en ce que** les lames (12) sont conçues comme des segments circulaires inclinés à un angle d'environ 90°.

9. Installation selon l'une quelconque des revendications ci-dessus, **caractérisée en ce que** l'élément de coupe supérieur (6) est monté de façon amovible dans le carter (5) du rasoir (6).

10. Installation selon l'une quelconque des revendications ci-dessus, **caractérisée en ce qu'**elle comprend un ordinateur pour commander automatiquement le dispositif de rasage (1).

11. Installation selon l'une quelconque des revendications ci-dessus, **caractérisée en ce que** l'ordinateur contient un programme dans lequel sont enregistrées les coordonnées de la surface de l'animal qui doit être rasée.

12. Installation selon l'une quelconque des revendications ci-dessus, **caractérisée en ce qu'**elle comprend un système d'identification des animaux.

13. Installation selon l'une quelconque des revendications ci-dessus, **caractérisée en ce qu'**elle comprend un dispositif d'ajustement chronologique composé d'un premier programme au moyen duquel il est possible d'ajuster la durée du rasage en fonction de l'animal qui doit être rasé, selon besoin.

14. Installation selon l'une quelconque des revendications ci-dessus, **caractérisée en ce que** la durée de rasage du pis est de 30 secondes de préférence.

15. Installation selon l'une quelconque des revendications ci-dessus, **caractérisée en ce que** le dispositif d'ajustement chronologique inclut un second programme au moyen duquel il est possible d'ajuster l'intervalle entre deux rasages en fonction de l'animal qui doit être rasé, selon besoin.

16. Installation selon l'une quelconque des revendications ci-dessus, **caractérisée en ce que** le nombre de traites pré-programmées est de dix de préférence.

17. Installation selon l'une quelconque des revendications ci-dessus, **caractérisée en ce qu'**elle comprend un système de détection avec l'aide duquel il est possible de déterminer les coordonnées de la partie de l'animal qui doit être rasée.

18. Installation selon l'une quelconque des revendications ci-dessus, **caractérisée en ce que** le système de détection comprend un détecteur, tel qu'un laser et/ou une caméra et/ou un détecteur d'ultrasons.

19. Installation selon l'une quelconque des revendications ci-dessus, **caractérisée en ce qu'**elle comprend un dispositif de traite automatique.

20. Installation selon l'une quelconque des revendications ci-dessus, **caractérisée en ce que** le dispositif de traite automatique est équipé d'un robot trayeur permettant de relier les gobelets trayeurs aux tétines de l'animal à traire.

21. Installation selon l'une quelconque des revendications ci-dessus, **caractérisée en ce que** le système de détection peut également être utilisé pour le robot trayeur.

22. Installation selon l'une quelconque des revendications ci-dessus, **caractérisée en ce que** la tête de rasage comprend un élément de coupe supérieur (6) et un élément de coupe inférieur rotatif (11).

23. Installation selon l'une quelconque des revendications ci-dessus, **caractérisée en ce qu'**elle est conçue de telle sorte que les pattes postérieures de l'animal puissent être rasées au moyen du dispositif de rasage (1).

24. Installation selon l'une quelconque des revendications ci-dessus, **caractérisée en ce qu'**elle comprend un bras robotisé permettant de déplacer la tête de rasage vers l'intérieur ou vers l'extérieur de la stalle et permettant de déplacer la tête de rasage dans un mouvement de va et vient.

25. Installation selon l'une quelconque des revendications ci-dessus, **caractérisée en ce que** la tête de rasage peut être amenée automatiquement en position de fonctionnement ou de non-fonctionnement.

26. Installation selon l'une quelconque des revendications ci-dessus, **caractérisée en ce qu'**il est possible d'amener les gobelets trayeurs en position de non-fonctionnement.

27. Installation selon l'une quelconque des revendications ci-dessus, **caractérisée en ce qu'**après dix traites par exemple, le pis de l'animal est rasé une fois.

28. Installation selon l'une quelconque des revendications ci-dessus, **caractérisée en ce que** une fois le rasage terminé, le dispositif de rasage est amené en position de non-fonctionnement, près de la paroi de la stalle.

29. Installation selon l'une quelconque des revendications ci-dessus, **caractérisée en ce que** le dispositif de rasage est réglable de telle sorte que le rasage dure 30 secondes.

30. Installation selon l'une quelconque des revendications ci-dessus, **caractérisée en ce que** le dispositif de rasage utilise le même détecteur laser que celui qui est utilisé pour la traite.

31. Procédé de rasage automatique des animaux, dans laquelle, une fois que l'animal a pénétré dans la stalle, l'animal ou au moins une partie éventuellement prédéterminée de l'animal est rasé(e) automatiquement au moyen d'une machine de rasage, **caractérisé en ce qu'**au cours du rasage, le rasoir (4) est déplacé sur toute la surface des pattes postérieures qui doivent être rasées dans un mouvement de va et vient.

32. Procédé selon la revendication 31, **caractérisé en ce qu'**une fois l'opération de rasage terminée, le rasoir (4) est déplacé à l'extérieur de la stalle.
